# EUROPEAN PATENT APPLICATION

(11) **EP 1 988 670 A1**
(43) Date of publication of application: **05.11.2008**
(21) Application number: 07107319.1
(22) Date of filing: 02.05.2007
(51) Int. Cl.: H04L 12/58

(54) **Message handling based on receiver display size**

(71) Applicant: Research In Motion Limited, Waterloo, Ontario N2L 3W8 (CA)
(72) Inventor: Hassan, Ahmed E. School of Computing, Kingston ON L7L 3N6 (CA); Martin, Daryl Joseph, Paradise Newfoundland & Labrador A1L 2Y6 (CA); Flora, Parminder Singh, Brampton Ontario L7A 3T3 (CA)
(74) Representative: Patel, Binesh

(57) **Abstract**

Before sending an original text-based message to a receiver that is known to have a display screen of limited size, a user may indicate a desire to translate the original message, at least in part, into a visually compressed message, where the visually compressed message uses abbreviations in place of many of the strings of characters in the original message.

## Description

The present invention relates generally to electronic messaging and, more specifically, to handling electronic messages based on the size of display screen of the receiving device.

The proliferation of mobile communication devices (e.g., cellular telephones) with text messaging capabilities but limited text composition tools (e.g., a telephone keypad) and message reading space (e.g., small display screen) has led to use of abbreviations for common words, syllables or even strings of characters. Similar abbreviations are familiar to users of networked instant messaging applications.

Recently, mobile communication devices with text messaging capabilities based on a full qwerty keyboard and a large, clear and colorful display screen for reading messages have been accepted into broad use. A user of a mobile communication device that has a full qwerty keyboard and a large screen will often exchange Short Messaging System (SMS) messages, or other text-based messages (e.g., e-mail messages, instant messages), with users of mobile communication devices with limited text entry capability and limited screen size.

Clearly, it would be desirable to visually compress an outgoing message from a large keyboard/large screen device to a small screen device to allow more of the outgoing message to be reviewed on a single page of the receiving device's screen. Furthermore, it would be desirable to decompress (expand) an incoming message from a small keyboard/small screen device to a large screen device, to allow better understanding of frequently used abbreviations.

### GENERAL

Before sending an original text-based message to a receiver that is known to have a display screen of limited size, a user may indicate a desire to translate the original message, at least in part, into a visually compressed message, where the visually compressed message uses abbreviations in place of many of the strings of characters in the original message.

In accordance with an aspect of the present invention, there is provided a method of handling an outgoing message. The method includes generating, based on the outgoing message, a translated message, where the translated message includes, in place of an original string of characters in the outgoing message, a corresponding translated string of characters. The method also includes producing a compound message by appending the outgoing message to the translated message and transmitting the compound message. Additionally, a mobile communication device is provided for carrying out this method and a computer readable medium is provided for containing instructions to allow a processor to carry out this method.

In accordance with another aspect of the present invention, there is provided a method of translating a received text message. The method includes receiving an indication of a selected string of characters, receiving an indication of a desire for translation of the selected string and transmitting a translation request message, the translation request message specifying the selected string of characters. The method further includes receiving a translation response message, the translation response message providing an original string of characters corresponding to the selected string of characters, and replacing, in a display of the text message, the selected string of characters with the original string of characters.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Reference will now be made to the drawings, which show by way of example, embodiments of the invention, and in which:

FIG. 1 illustrates exemplary steps in a method of handling a message before sending the message to a receiving device according to one embodiment;

FIG. 2 illustrates exemplary steps in the step of processing a message in the method of FIG. 1, according to an embodiment;

FIG. 3 illustrates exemplary steps in a method, carried out by a receiving device, of clarifying the content of a received message that has been handled according to the method of FIG. 1; and

FIG. 4 illustrates an exemplary device operable to carry out the methods of FIGS. 1, 2 and 3.

### DESCRIPTION OF PREFERRED EMBODIMENTS

Abbreviations frequently used in wireless mobile (SMS) text messaging and wired (and wireless) participation in instant messaging (IM) include those presented in the following table.

| String | Replacement |
|---|---|
| be | b |
| see | c |
| are | r |
| you | u |
| why | y |
| ate | 8 |
| for | 4 |
| to | 2 |
| too | 2 |
| two | 2 |
| activate | activ8 |
| great | gr8 |
| mate | m8 |
| later | I8r |
| plate | pl8 |
| fore | 4 |
| before | b4 |
| therefore | there4 |
| ss | $ |
| 00 | % |
| your | ur |
| because | cos |
| between | btwn |
| orr* | oz |
| sorry | soz |
| tomorrow | tomoz |
| tomorrow | 2moz |
| forgot | 4gt |
| phone | fon |

In overview, a user may employ a user interface to indicate that a message-in-composition is to be sent to a user having a device with a relatively small screen. Message composition may continue as usual. Once the user has indicated completion of the composition of the original message (e.g., by selecting a "Send" menu item from a user interface menu), the device may visually compress the original message. That is, the device may process the original message to replace selected strings in the original message with abbreviated strings representative of the selected strings. The device may then send the visually compressed message to the intended receiver.

More broadly, the device may be seen to be translating parts of the original message to a second language where the second language is a visually compressed text language. That is, "great" translates to "gr8". Indeed, to a person unfamiliar with standard SMS/IM abbreviations, a message written using a significant number of SMS/IM abbreviations may seem to have been composed in a different language.

In an alternate instance, "great" may be translated to "magnifique", which clearly does not compress the original message, but may enhance the understanding of the message by the receiver.

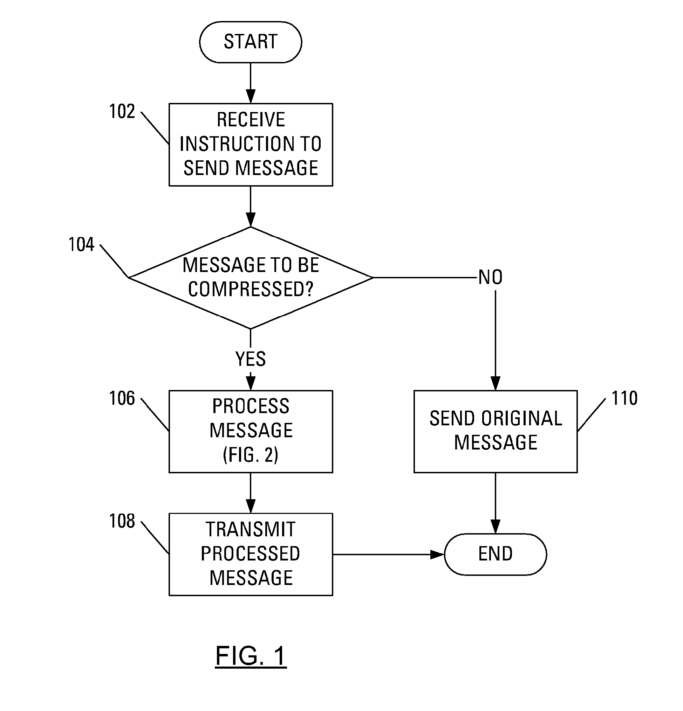

In operation, a processor may handle an outgoing message according to steps of an exemplary method illustrated in FIG. 1.

That is, once the processor has received (step 102) an instruction indicating that composition of a message is complete and the message is to be sent, the processor determines (step 104) whether the user has indicated that the message is to be received by a device with limited display screen area, i.e., whether the user has indicated that the message is to be visually compressed.

This indication may be accomplished in one of several ways. For a first example, while composing the message, the user may use a user interface component to indicate that the message is to be received by a device with limited display screen area. For a second example, an entry for the recipient of the message, stored as part of an address book application executed on the device, may have a field for indicating whether messages to the recipient are to be visually compressed. For a third example, the user may specify that the message is to be visually compressed while initializing message composition. In the latter case, the user may be familiar with being presented with a menu having menu items such as, "Compose Email", "Compose SMS" and "Compose MMS". To this menu, a further menu item, "Compose Compressed SMS", may be added.

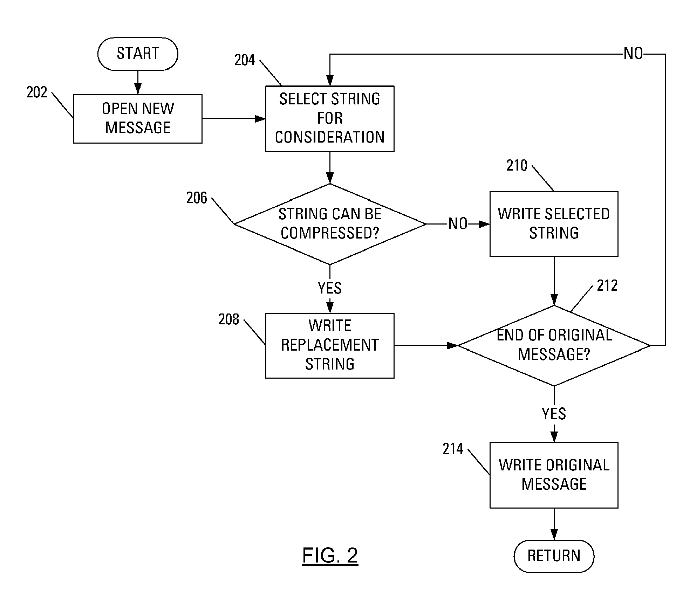

Where the processor determines (step 104) that the user has indicated that the message is to be received by a device with limited display screen area, the processor processes (step 106) the message to generate a processed message. Steps of an exemplary method of processing a message are illustrated in FIG. 2.

Once the processor has processed the message, the processor transmits (step 108) the processed message. Alternatively, where the processor determines (step 104) that the user has not indicated that the message is to be received by a device with limited display screen area, the processor sends (step 110) the original message. Either message may be transmitted (step 108, 110) using message transmission techniques that should be familiar to the person of ordinary skill in the art. Accordingly, a discussion of details of such message transmission techniques is considered to be beyond the scope of this application.

In FIG. 2, the exemplary method of processing a message begins when the processor generates and opens (step 202) a new (blank) message for storing the processed message. The processor then selects (step 204) a string in the original message for consideration. The processor determines (step 206) whether the selected string can be visually compressed. More specifically, such determining may be accomplished as a table look-up in a table of strings associated with (visually compressed) replacement strings. That is, the processor attempts to locate the selected string in the table. If the processor determines (step 206) that the selected string can be visually compressed, the processor determines a replacement string that corresponds to the selected string and writes (step 208) the replacement string to the new message. The look-up table may be an agreed-upon standard table of abbreviations, may be a table of abbreviations created by the user or may be a combination of two such tables.

The selection process (step 204) may progress logically word-by-word or syllable-by-syllable through the original message from beginning to end. Alternatively, some preprocessing may be performed on the original message to identify a subset of the strings in the original message as candidates for replacement. For example, each occurrence of a phonetic regular expression may be identified as candidates for replacement. The user may want to design a replacement rule that will change all instances of the phonetic regular expression "ate" to 8.

Upon writing (step 208) the replacement string to the new message, the processor determines (step 212) whether the end of the original message has been reached. If the processor determines (step 212) that there remains strings to be selected for consideration, the processing returns to the selection (step 204) of another string.

In the event that the subsequently selected string is determined (step 206) unsuitable for visual compression, the processor writes (step 210) the subsequently selected string to the new message without alteration.

Upon determining (step 212) that the end of the original message has been reached, the processor may, optionally, write (step 214) the entire original message to the new message. Beneficially, the original message appended to the processed version of the original message produces a compound message. The user of the receiving device may quickly review the processed (visually compressed) version of the message using the limited display screen area and, if any of the replacements are unclear, the receiver may scroll down, through the compound message, to read the original message.

It is anticipated that some implementations of the exemplary method of FIG. 2 may omit the appending of the original message to the visually compressed message (step 214). In such an instance, there may arise some confusion in the mind of the user of the receiving device upon reviewing the compressed message.

Where the look-up table used to determine replacement strings at the sending device is an agreed-upon standard table of abbreviations, of which table a copy is available at the receiving device, the user of the receiving device may request translation of a selected string or translation of the entire message. In the case of the former, the user of the receiving device may use an input device in combination with a user interface for the receiving device to select a string (e.g., "I8r") in the received, visually compressed message. The user may then employ the user interface to request translation. For example, the user may press a menu button and, from a menu presented responsive to the pressing of the menu button, select a "Decompress Selected String" menu item.

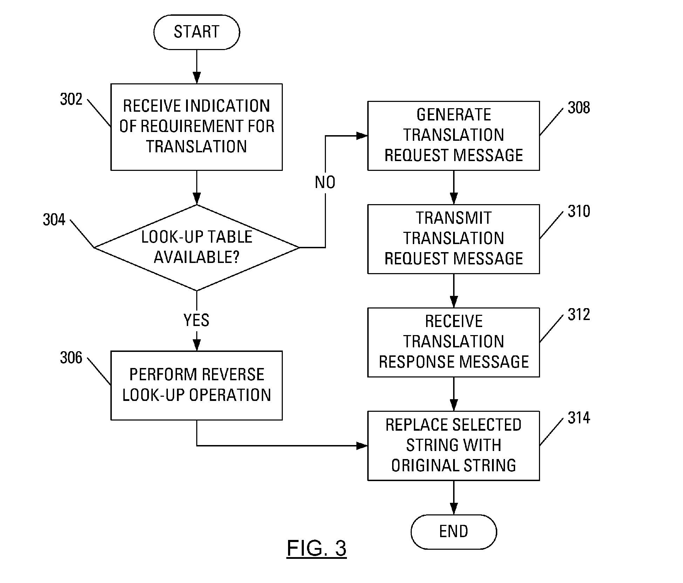

As illustrated in FIG. 3, the receiving device receives (step 302) the indication of a requirement for translation, which indicates the string (e.g., "I8r") requiring translation. After first determining (step 304) that a look-up table is available, the receiving device may perform (step 306) a reverse look-up in the agreed-upon standard table of abbreviations to determine the original string (e.g., "later") that resulted in the selected replacement string. The receiving device may then replace (step 314), in the displayed message, the selected string with the original string. Before performing a reverse look-up in the agreed-upon standard table of abbreviations, the receiving device may first determine whether the received message is a compound message. That is, the receiving device may first determine whether the received message includes the original message appended to the processed version of the original message. If the received message is a compound message, the receiving device may determine the original string that resulted in the selected replacement string by analyzing the original message. As an alternative to the reverse look-up in the agreed-upon standard table of abbreviations or analyzing the original message, the receiving device may transmit a request, to the sender of the visually compressed message, for a copy of the original message. The copy of the original message may arrive at the receiving device accompanied by a mapping of terms in the visually compressed message to terms in the original message.

Where the look-up table used to determine replacement strings at the sending device is unique to the sending device, or is otherwise unavailable to the receiving device, an alternative translation method is required. One alternative translation method is over-the-air, string-by-string translation, wherein the user of the receiving device may employ the user interface to select a specific string in the received (visually compressed) message and to indicate a requirement for a translation of the specific string.

Responsive to receiving (step 302) the indication of a need for translation and determining (step 304) that no look-up table is available, the receiving device may generate (step 308) a translation request message and transmit (step 310) the translation request message to the sending device.

The translation request message may have a predetermined structure that includes a field for indicating the selected string and a field for indicating the need for a translation of the selected string. Responsive to receiving such a translation request message, the sending device may perform a reverse look-up in the look-up table to determine the original string that corresponds to the selected string indicated in the translation request message and send a translation response message to the receiving device. The translation response message may have a predetermined structure that includes a field for indicating the selected string and a field for indicating the original string corresponding to the selected string.

Upon receiving (step 312) the translation response message, the receiving device replaces (step 314), in the displayed message, the selected string with the original string.

To anticipate, or avoid, a requirement for translation request messages, the sending device may send a set of complex, or very user-specific, translations associated with the visually compressed message, within the visually compressed message or separate from the compressed message. Advantageously, using such an approach, a user will already have the translation information on the receiving device when a translation request is triggered.

In an alternative embodiment, the translation request message, rather than requesting a translation for a selected string, requests a translation of the entire message. In such a case, the translation request message may have a predetermined structure that includes a field for indicating an identifier of the received message. Accordingly, the translation response message is expected to have a field for carrying the entire original message.

As will be clear to a person of ordinary skill in the art, in another embodiment of this invention, the sending device may cache a table of strings and their replacements on a remote server, so that when a receiving device requests a translation, the remote server, upon receiving the translation request and rather than forwarding the request to the sending device, responds automatically to the translation request with an appropriate translation response. Advantageously, the sending device need not be on or in cellular coverage for the receiving device to obtain an appropriate translation response.

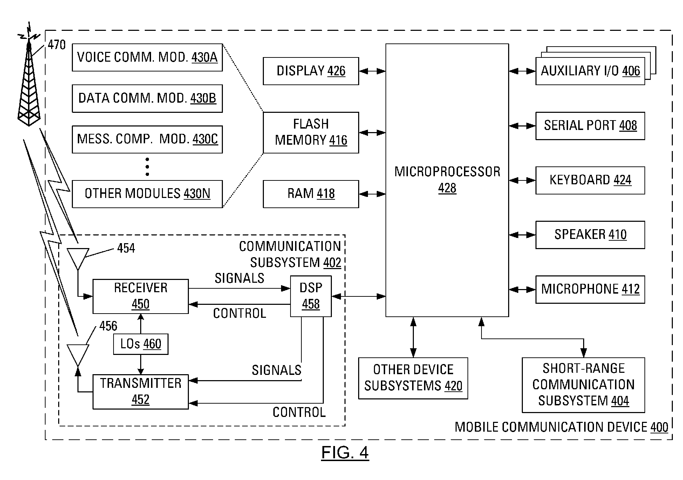

A mobile communication device 400 suitable for carrying out the above-described methods is illustrated in FIG. 4. The mobile device 400 illustrated in FIG. 4 includes a housing, an input device (a keyboard 424) and an output device (a display 426), which is preferably a full graphic, or full color, Liquid Crystal Display (LCD). Other types of output devices may alternatively be utilized. A processing device (a microprocessor 428) is shown schematically in FIG. 4 as coupled between the keyboard 424 and the display 426. The microprocessor 428 controls the operation of the display 426, as well as the overall operation of the mobile device 400, in part, responsive to actuation of keys on the keyboard 424 by a user.

The housing may be elongated vertically, or may take on other sizes and shapes (including clamshell housing structures). The keyboard may include a mode selection key, or other hardware or software, for switching between text entry and telephony entry.

In addition to the microprocessor 428, other parts of the mobile device 400 are shown schematically in FIG. 4. These include: a communications subsystem 402; a short-range communications subsystem 404; the keyboard 424 and the display 426, along with other input/output devices including a set of auxiliary I/O devices 406, a serial port 408, a speaker 410 and a microphone 412; as well as memory devices including a flash memory 416 and a Random Access Memory (RAM) 418; and various other device subsystems 420. The mobile device 400 is preferably a two-way radio frequency (RF) communication device having voice and data communication capabilities. In addition, the mobile device 400 preferably has the capability to communicate with other computer systems via the Internet.

Operating system software executed by the microprocessor 428 is preferably stored in a computer readable medium, such as the flash memory 416, but may be stored in other types of memory devices, such as a read only memory (ROM) or similar storage element. In addition, system software, specific device applications, or parts thereof, may be temporarily loaded into a volatile store, such as the RAM 418. Communication signals received by the mobile device may also be stored to the RAM 418.

The microprocessor 428, in addition to its operating system functions, enables execution of software applications on the mobile device 400. A predetermined set of software applications that control basic device operations, such as a voice communications module 430A and a data communications module 430B, may be installed on the mobile device 400 during manufacture. A message compression module 430C may also be installed on the mobile device 400 during manufacture, to implement aspects of the present invention. As well, additional software modules, illustrated as an other software module 430N, which may be, for instance, a personal information manager (PIM) application, may be installed during manufacture. The PIM application is preferably capable of organizing and managing data items, such as e-mail messages, calendar events, voice mail messages, appointments and task items. The PIM application is also preferably capable of sending and receiving data items via a wireless carrier network 470. Preferably, the data items managed by the PIM application are seamlessly integrated, synchronized and updated via the wireless carrier network 470 with the device user's corresponding data items stored or associated with a host computer system.

Communication functions, including data and voice communications, are performed through the communication subsystem 402 and, possibly, through the short-range communications subsystem 404. The communication subsystem 402 includes a receiver 450, a transmitter 452 and one or more antennas, illustrated as a receive antenna 454 and a transmit antenna 456. In addition, the communication subsystem 402 also includes a processing module, such as a digital signal processor (DSP) 458, and local oscillators (LOs) 460. The specific design and implementation of the communication subsystem 402 is dependent upon the communication network in which the mobile device 400 is intended to operate. For example, the communication subsystem 402 of the mobile device 400 may be designed to operate with the Mobitex^{™}, DataTAC^{™} or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Other types of data and voice networks, both separate and integrated, may also be utilized with the mobile device 400.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex^{™} networks, mobile devices are registered on the network using a Mobitex Access Number (MAN) associated with each device and in DataTAC^{™} networks, mobile devices are registered on the network using a Logical Link Identifier (LLI) associated with each device. In GPRS networks, however, network access is associated with a subscriber or user of a device. To operate on a GPRS network, a GPRS device therefore requires a subscriber identity module, commonly referred to as a Subscriber Identity Module (SIM) card. Despite identifying a subscriber by SIM, mobile devices within GSM/GPRS networks are uniquely identified using an International Mobile Equipment Identity (IMEI) number.

When required network registration or activation procedures have been completed, the mobile device 400 may send and receive communication signals over the wireless carrier network 470. Signals received from the wireless carrier network 470 by the receive antenna 454 are routed to the receiver 450, which provides for signal amplification, frequency down conversion, filtering, channel selection, etc., and may also provide analog to digital conversion. Analog-to-digital conversion of the received signal allows the DSP 458 to perform more complex communication functions, such as demodulation and decoding. In a similar manner, signals to be transmitted to the wireless carrier network 470 are processed (e.g., modulated and encoded) by the DSP 458 and are then provided to the transmitter 452 for digital to analog conversion, frequency up conversion, filtering, amplification and transmission to the wireless carrier network 470 (or networks) via the transmit antenna 456.

In addition to processing communication signals, the DSP 458 provides for control of the receiver 450 and the transmitter 452. For example, gains applied to communication signals in the receiver 450 and the transmitter 452 may be adaptively controlled through automatic gain control algorithms implemented in the DSP 458.

In a data communication mode, a received signal, such as a text message or web page download, is processed by the communication subsystem 402 and is input to the microprocessor 428. The received signal is then further processed by the microprocessor 428 for output to the display 426, or alternatively to some auxiliary I/O devices 406. A device user may also compose data items, such as e-mail messages, using the keyboard 424 and/or some other auxiliary I/O device 406, such as a touchpad, a rocker switch, a thumb-wheel, or some other type of input device. The composed data items may then be transmitted over the wireless carrier network 470 via the communication subsystem 402.

In a voice communication mode, overall operation of the device is substantially similar to the data communication mode, except that received signals are output to a speaker 410, and signals for transmission are generated by a microphone 412. Alternative voice or audio I/O subsystems, such as a voice message recording subsystem, may also be implemented on the mobile device 400. In addition, the display 426 may also be utilized in voice communication mode, for example, to display the identity of a calling party, the duration of a voice call, or other voice call related information.

The short-range communications subsystem 404 enables communication between the mobile device 400 and other proximate systems or devices, which need not necessarily be similar devices. For example, the short-range communications subsystem may include an infrared device and associated circuits and components, or a Bluetooth^{™} communication module to provide for communication with similarly-enabled systems and devices.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A method of handling an outgoing message, said method comprising:
generating, based on said outgoing message, a translated message, where said translated message includes, in place of an original string of characters in said outgoing message, a corresponding translated string of characters;
producing a compound message by appending said outgoing message to said translated message; and
transmitting said compound message.

2. The method of claim 1 further comprising:
receiving an instruction to send said outgoing message, said outgoing message having a destination;
determining, based on said destination, whether said outgoing message is to be processed; and
performing said generating said translated message if said outgoing message is to be processed.

3. The method of claim 1 or claim 2 wherein said generating said translated message comprises:
selecting said original string of characters in said outgoing message;
determining that said translated string of characters corresponds to said original string of characters.

4. The method of claim 3 further comprising, before said determining that said translated string of characters corresponds to said original string of characters, determining that said original string can be translated.

5. The method of claim 4 wherein said determining that said original string can be translated comprises locating said original string of characters in a table.

6. The method of claim 5 wherein said original string of characters corresponds, in said table, to said translated string of characters.

7. The method of any one of claims 1-6 wherein said translated message is a visually compressed message and said translated string is an abbreviated string.

8. A mobile communication device comprising:
a processor adapted to:
generate, based on an outgoing message, a translated message, where said translated message includes, in place of an original string of characters in said outgoing message, a corresponding translated string of characters; and
produce a compound message by appending said outgoing message to said translated message; and
a transmitter for transmitting said compound message.

9. A computer readable medium containing computer-executable instructions that, when performed by processor, cause said processor to:
generate, based on an outgoing message, a translated message, where said translated message includes, in place of an original string of characters in said outgoing message, a corresponding translated string of characters;
produce a compound message by appending said outgoing message to said translated message; and
arrange transmission of said compound message.

10. A method of translating a received text message, said method comprising:
receiving an indication of a selected string of characters;
receiving an indication of a desire for translation of said selected string;
transmitting a translation request message, said translation request message specifying said selected string of characters;
receiving a translation response message, said translation response message providing an original string of characters corresponding to said selected string of characters; and
replacing, in a display of said text message, said selected string of characters with said original string of characters.
